# EUROPEAN PATENT APPLICATION

(11) **EP 2 626 394 A1**
(43) Date of publication of application: **14.08.2013**
(21) Application number: 11830715.6
(22) Date of filing: 05.10.2011
(51) Int. Cl.: C09D 127/12, C09D 7/12, C09D 167/00, C09D 175/06

(54) **COATING COMPOSITION FOR COATING THE SURFACE OF REFLECTIVE PLATE FOR SOLAR HEAT COLLECTOR AND METHOD FOR PRODUCING REFLECTIVE PLATE FOR SOLAR HEAT COLLECTOR**

(30) Priority: 05.10.2010 JP 2010225785
(71) Applicant: Asahi Glass Company, Limited, Tokyo 100-8405 (JP)
(72) Inventor: HARA, Yuji, Tokyo 100-8405 (JP); SAITO, Shun, Tokyo 100-8405 (JP); MASUDA, Sho, Tokyo 100-8405 (JP)
(74) Representative: Müller-Boré & Partner Patentanwälte
(86) International application number: PCT/JP2011/073012
(87) International publication number: WO 2012/046783

(57) **Abstract**

To provide a coating composition for coating the surface of a solar heat-collecting reflective plate, capable of forming on the surface of a reflective substrate a coating film which has excellent weather resistance and impact resistance, and which is excellent in the adhesion and is thereby hardly peeled, and a process for producing a solar heat-collecting reflective plate using the coating composition.

A coating composition which comprises a fluorinated polymer (A) having a hydroxy value of from 110 to 250 mgKOH/g resin, a polyester polymer (B) having a hydroxy value of from 100 to 300 mgKOH/g resin, a polyisocyanate type curing agent (C) and a solvent (D). Further, a process for producing a solar heat-collecting reflective plate, which comprises applying the coating composition to a surface of a reflective substrate to form a coating layer, and removing the solvent (D) to form a coating film.

## Description

### TECHNICAL FIELD

The present invention relates to a coating composition for coating the surface of a solar heat-collecting reflective plate, and a process for producing a solar heat-collecting reflective plate.

### BACKGROUND ART

In recent years, from the viewpoint of global environmental problems, there have been many attempts to suppress use of fossil fuels, and as one of them, a solar heat-collecting system which utilizes solar heat is known. As such a solar heat-collecting system, for example, a solar heat-collecting system may be mentioned which comprises a heat collection tube provided with a heat medium such as water or an inorganic salt, and a reflective plate to reflect sunlight to collect it in the heat collection tube. In such a solar heat-collecting system, sunlight is reflected by the reflective plate and collected in the heat collection tube, and the heat medium in the heat collection tube is heated by the heat of such sunlight to obtain thermal energy.

Whereas, as a mirror which is commonly used indoors, a mirror is widely used which comprises a reflective substrate comprising a glass substrate having a reflective metal layer on one surface, and a coating film (back coating film) formed on the reflective metal layer side of the reflective substrate. In such a mirror, corrosion and modification of the reflective metal layer are prevented by the glass substrate and the coating film. Specifically, a silver film as the reflective metal layer is formed on a transparent glass substrate. However, the silver film is very easily oxidized. Accordingly, an anti-corrosive coating material is applied on the silver film, dried and cured to form a back coating film. Further, a copper film may be formed on the silver film to protect the silver film, and a coating film comprising the anti-corrosive coating material is further formed on the silver film in some cases.

As coating compositions to form the coating film, the following compositions are, for example, disclosed.
(i) A coating composition comprising a molybdenum compound as a lead-free pigment, and a synthetic resin binder (Patent Document 1).
(ii) A coating composition comprising a metal salt such as a thiazole type metal salt, an azole type or diamine type compound, and a synthetic resin (Patent Document 2).

The coating compositions (i) and (ii) are advantageous from the environmental viewpoint, since substantially no lead-type pigment will thereby be contained in the coating film. However, with the coating films formed by the coating compositions (i) and (ii), no consideration is made with respect to exposure outdoors for a long period of time as a solar heat-collecting reflective plate. Particularly, a solar heat-collecting reflective plate is used in a severe environment of e.g. desert areas in many cases and is required to have excellent weather resistance. Further, in e.g. desert areas, the coating film may be peeled from the reflective metal layer by expansion or shrinkage due to a significant temperature difference. Further, by sand impinging on the coating film at a high speed by e.g. sandstorms, the coating film may be cracked, and moisture is infiltrated through the crack to oxidize the metal reflective layer, thus lowering the reflectance of the reflective plate.

Patent Document 2 discloses use of a fluororesin as a synthetic resin to provide the durability required for the coating film. However, simply by using a fluororesin, it is difficult to suppress peeling of the coating film by the temperature difference.

### PRIOR ART DOCUMENTS

### PATENT DOCUMENTS

Patent Document 1: JP-A-2007-45849
Patent Document 2: JP-A-10-33333

### DISCLOSURE OF INVENTION

### TECHNICAL PROBLEM

It is an object of the present invention to provide a coating composition for coating the surface of a solar heat-collecting reflective plate, which is capable of forming a coating film which has excellent weather resistance and impact resistance and which is excellent in the adhesion and is thereby hardly peeled, on the surface of a reflective substrate.

Further, it is another object of the present invention to provide a process for producing a solar heat-collecting reflective plate having on the surface of a reflective substrate a coating film which has excellent weather resistance and impact resistance and which is excellent in the adhesion and is thereby hardly peeled.

### SOLUTION TO PROBLEM

The present invention has adopted the following constructions to accomplish the above objects.

[1] A coating composition for coating the surface of a solar heat-collecting reflective plate, which comprises a fluorinated polymer (A) having a hydroxy value of from 110 to 250 mgKOH/g resin, a polyester polymer (B) having a hydroxy value of from 100 to 300 mgKOH/g resin, a polyisocyanate type curing agent (C) and a solvent (D).

[2] The coating composition for coating the surface of a solar heat-collecting reflective plate according to the above [1], wherein the polyester polymer (B) has at least three hydroxy groups on average in one molecule and has a number average molecular weight of from 500 to 5,000.

[3] The coating composition for coating the surface of a solar heat-collecting reflective plate according to the above [1] or [2], wherein the polyisocyanate type curing agent (C) is blended so that the proportion of isocyanate groups is from 0.5 to 1.5 times by mol per 1 mol of the total number of hydroxy groups contained in the fluorinated polymer (A) and the polyester polymer (B).

[4] The coating composition for coating the surface of a solar heat-collecting reflective plate according to any one of the above [1] to [3], wherein the mass ratio (A/B) of the fluorinated polymer (A) to the polyester polymer (B) is from 45/55 to 95/5.

[5] The coating composition for coating the surface of a solar heat-collecting reflective plate according to any one of the above [1] to [4], which contains a pigment component (E).

[6] A process for producing a solar heat-collecting reflective plate, which comprises applying the coating composition as defined in any one of the above [1] to [5] on a surface of a reflective substrate to form a coating layer, and removing the solvent (D) to form a coating film.

[7] The process for producing a solar heat-collecting reflective plate according to the above [6], wherein the reflective substrate is a reflective substrate (I) comprising a glass substrate having on at least one surface a reflective layer made of at least one of a metal and a metal oxide.

[8] The process for producing a solar heat-collecting reflective plate according to the above [6], wherein the reflective substrate is a reflective substrate (II) made of a metal, of which the reflective surface side is mirror-finished.

[9] The process for producing a solar heat-collecting reflective plate according to the above [6], wherein the reflective substrate is a reflective substrate (III) made of a metal, having a reflective layer made of at least one of a metal and a metal oxide formed on the reflective surface side.

[10] The process for producing a solar heat-collecting reflective plate according to the above [8] or [9], wherein the substrate made of a metal is a substrate made of at least one member selected from the group consisting of aluminum, an aluminum alloy and stainless steel.

### ADVANTAGEOUS EFFECTS OF INVENTION

By the coating composition for coating the surface of a solar heat-collecting reflective plate of the present invention, it is possible to form a coating film which has excellent weather resistance and impact resistance and which is excellent in the adhesion and is thereby hardly peeled, on the surface of a reflective substrate of a solar heat-collecting reflective plate.

Further, according to the process for producing a solar heat-collecting reflective plate of the present invention, it is possible to obtain a solar heat-collecting reflective plate having on the surface of a reflective substrate a coating film which has excellent weather resistance and impact resistance and which is excellent in the adhesion and is thereby hardly peeled.

### BRIEF DESCRIPTION OF DRAWINGS

Fig. 1 is a cross-sectional view illustrating the process for production of the solar heat-collecting reflective plate of the present invention.
Fig. 2 is a cross-sectional view illustrating the process for production of the solar heat-collecting reflective plate of the present invention.
Fig. 3 is a cross-sectional view illustrating the process for production of the solar heat-collecting reflective plate of the present invention.

### DESCRIPTION OF EMBODIMENTS

In this specification, repeating units to be directly formed by polymerization of a monomer, and units to be formed by chemical conversion of part of repeating units formed by polymerization of a monomer will be generally referred to as "polymerized units". Further, the term (meth)acrylic acid represents at least one of acrylic acid and methacrylic acid.

### [Coating composition for coating surface of solar heat-collecting reflective plate]

The coating composition for coating the surface of a solar heat-collecting reflective plate of the present invention (hereinafter referred to as "coating composition") is a composition comprising as essential components a fluorinated polymer (A) having a hydroxy value of from 110 to 250 mgKOH/g resin (hereinafter referred to simply as "fluorinated polymer (A)"), a polyester polymer (B) having a hydroxy value of from 100 to 300 mgKOH/g resin (hereinafter referred to simply as "polyester polymer (B)", a polyisocyanate type curing agent (C) (hereinafter referred to as "curing agent (C)") and a solvent (D).

### (Fluorinated polymer (A))

The fluorinated polymer (A) has a role to improve the weather resistance, and the adhesion of a coating film to a reflective substrate of a solar heat-collecting reflective plate.

In view of the adhesion of a coating film, the hydroxy value of the fluorinated polymer (A) is at least 110 mgKOH/g resin, preferably at least 130 mgKOH/g resin. Further, with a view to preventing the coating film from being fragile, thus lowering the mechanical properties such as the impact resistance, the hydroxy value of the fluorinated polymer (A) is at most 250 mgKOH/g resin, preferably at most 200 mgKOH/g resin.

The intrinsic viscosity of the fluorinated polymer (A) as measured in tetrahydrofuran at 30°C is preferably from 0.02 to 0.1 dl/g, more preferably from 0.02 to 0.07 dl/g, further preferably at least 0.02 dl/g and less than 0.05 dl/g. When the intrinsic viscosity is within such a range, the mechanical strength of the coating film will be improved, and further, the amount of use of the solvent (D) in the coating composition can be reduced, whereby the coating film will easily be formed.

The intrinsic viscosity of the fluorinated polymer (A) can be adjusted by adjusting the number average molecular weight of the fluorinated polymer (A).

The number average molecular weight of the fluorinated polymer (A) is preferably from 2,000 to 30,000, more preferably from 3,000 to 20,000.

The fluorinated polymer (A) is preferably a fluorinated polymer (hereinafter referred to as "fluorinated polymer (A1)") having polymerized units (a1) derived from a fluoroolefin, polymerized units (a2) derived from a monomer having a hydroxy group, and polymerized units (a3) derived from a monomer other than the fluoroolefin and the monomer having a hydroxy group (hereinafter referred to as "another monomer"), in view of the solubility in the solvent (D), the weather resistance of the coating film, the coating workability, etc.

The fluoroolefin to form the polymerized units (a1) may, for example, be a C₂₋₃ fluoroolefin such as tetrafluoroethylene, chlorotrifluoroethylene, trifluoroethylene, vinylidene fluoride, hexafluoropropylene or pentafluoropropylene. Among them, in view of favorable alternating copolymerizability with another monomer, it is preferably tetrafluoroethylene or chlorotrifluoroethylene, more preferably chlorotrifluoroethylene.

One type or two or more types of the polymerized units (a1) may be contained in the fluorinated polymer (A1).

The polymerized units (a2) are polymerized units derived from a monomer having a hydroxy group. The polymerized units (a2) are preferably formed by polymerizing a monomer having a hydroxy group.

The monomer having a hydroxy group may, for example, be a monomer having a hydroxy group and a polymerizable double bond. Specifically, it may, for example, be a hydroxyalkyl vinyl ether such as 2-hydroxyethyl vinyl ether, 3-hydroxypropyl vinyl ether, 2-hydroxypropyl vinyl ether, 2-hydroxy-2-methylpropyl vinyl ether, 4-hydroxybutyl vinyl ether, 4-hydroxy-2-methylbutyl vinyl ether, 5-hydroxypentyl vinyl ether or 6-hydroxyhexyl vinyl ether; an ethylene glycol monovinyl ether such as diethylene glycol monovinyl ether, triethylene glycol monovinyl ether or tetraethylene glycol monovinyl ether; a hydroxyalkyl allyl ether such as 2-hydroxyethyl allyl ether, 4-hydroxybutyl allyl ether or glycerol monoallyl ether; a hydroxyalkyl vinyl ester such as 2-hydroxyethyl vinyl ester or 4-hydroxybutyl vinyl ester; a hydroxyalkyl allyl ester such as hydroxyethyl allyl ester or hydroxybutyl allyl ester; or a hydroxyalkyl (meth)acrylate such as hydroxyethyl (meth)acrylate.

Among them, in view of availability, the monomer having a hydroxy group is preferably a hydroxyalkyl vinyl ether, more preferably 2-hydroxyethyl vinyl ether, 3-hydroxypropyl vinyl ether or 4-hydroxybutyl vinyl ether, further preferably 2-hydroxyethyl vinyl ether or 4-hydroxybutyl vinyl ether.

Further, the polymerized units (a2) may be formed by a method of polymerizing a monomer having no hydroxy group, and chemically converting part of polymerized units of the obtained polymer to introduce hydroxy groups.

For example, a monomer having a functional group other than a hydroxy group is polymerized, and the obtained polymer is reacted with a compound having a hydroxy group and a functional group reactive with the above functional group to chemically convert part (functional groups) of the polymerized units to form the polymerized units (a2). As a specific example, a method may be mentioned which comprises polymerizing a monomer having a carboxy group, and reacting the obtained polymer with a diol compound.

One type or two or more types of the polymerized units (a2) may be contained in the fluorinated polymer (A1).

The polymerized units (a3) are polymerized units derived from another monomer copolymerizable with the fluoroolefin to form the polymerized units (a1) and the monomer to form the polymerized units (a2). The fluorinated polymer (a1) having the polymerized units (a3) is advantageous in view of the solubility in the solvent (D).

Such another monomer may, for example, be a vinyl ether, an allyl ether, an isopropenyl ether, a vinyl carboxylate, an allyl carboxylate, an isopropenyl carboxylate, a methallyl ether, a methallyl carboxylate, an α-olefin or a (meth)acrylate.

The vinyl ether may, for example, be an alkyl vinyl ether such as ethyl vinyl ether, butyl vinyl ether, cyclohexyl vinyl ether, a fluoroalkyl vinyl ether or a perfluoro(alkyl vinyl ether).

The allyl ether may, for example, be an alkyl allyl ether such as ethyl allyl ether or cyclohexyl allyl ether.

The isopropenyl ether may, for example, be an alkyl isopropenyl ether such as methyl isopropenyl ether.

The vinyl carboxylate may, for example, be a fatty acid vinyl ester such as VeoVa 10 (tradename, manufactured by Shell Kagaku K.K.) which is a fatty acid vinyl ester having a branched alkyl group, vinyl butyrate, vinyl acetate, vinyl pivalate or vinyl versatate.

The allyl carboxylate may, for example, be a fatty acid allyl ester such as allyl propionate or allyl acetate.

The α-olefin may, for example, be ethylene, propylene or isobutylene.

The (meth)acrylate may, for example, be methyl (meth)acrylate, ethyl (meth)acrylate or butyl (meth)acrylate.

In view of excellent copolymerizability with the fluoroolefin, such another monomer is preferably a vinyl ether, a vinyl carboxylate, an allyl ether or an allyl carboxylate, more preferably an alkyl vinyl ether having a C₁₋₁₀ linear, branched or alicyclic alkyl group or a fatty acid vinyl ester.

One type or two or more types of the polymerized units (a3) may be contained in the fluorinated polymer (A1).

The proportion of the polymerized units (a1) in all the polymerized units in the fluorinated polymer (A1) is preferably from 30 to 70 mol%, more preferably from 40 to 60 mol%. When the proportion of the polymerized units (a1) is within such a range, the weather resistance of the coating film will be improved, the solubility of the fluorinated polymer (A1) in the solvent (D), the gloss, the pigment dispersability and the like will be improved.

The proportion of the polymerized units (a2) in all the polymerized units in the fluorinated polymer (A1) is preferably from 1 to 50 mol%, more preferably from 3 to 40 mol%. When the proportion of the polymerized units (a2) is within such a range, the adhesion of the coating film to a reflective substrate of a solar heat-collecting reflective plate will be improved, and it is easy to prevent the coating film from being fragile, thus lowering the mechanical properties such as the impact resistance.

The proportion of the polymerized units (a3) in all the polymerized units in the fluorinated polymer (A1) is preferably from 1 to 50 mol%, more preferably from 3 to 40 mol%. When the proportion of the polymerized units (a3) is within such a range, the solubility of the fluorinated polymer (A1) in the solvent (D) will be improved, and the weather resistance and the adhesion of the coating film are likely to be obtained.

As the fluorinated polymer (A), a fluorinated polymer having hydroxy groups other than the fluorinated polymer (A1) may be used. For example, a fluorinated polymer having polymerized units (a1) and the polymerized units (a2) and having no polymerized units (a3) may be used.

In the present invention, the fluorinated polymer (A) may be used alone or in combination of two or more.

The content of the fluorinated polymer (A) in the coating composition of the present invention is preferably from 10 to 90 mass%, more preferably from 20 to 80 mass%. When the content of the fluorinated polymer (A) is within such a range, the weather resistance, the adhesion and the impact strength of the coating film will be improved.

### (Polyester polymer (B))

The polyester polymer (B) is preferably crosslinked with the fluorinated polymer (A) via the curing agent (C).

With a view to suppressing bleed out of the polyester polymer (B) from the coating film and in view of the stain resistance, the hydroxy value of the polyester polymer (B) is at least 100 mgKOH/g resin, preferably at least 150 mgKOH/g. Further, with a view to suppressing gelation, the hydroxy value of the polyester polymer (B) is at most 300 mgKOH/g resin, preferably at most 250 mgKOH/g resin. When the hydroxy value of the polyester polymer (B) is within such a range, the compatibility with the fluorinated polymer (A) will be improved.

The number average molecular weight of the polyester polymer (B) is preferably from 500 to 5,000, more preferably from 500 to 3,000. When the number average molecular weight is within such a range, the mechanical strength of the coating film will be improved and in addition, gelation is likely to be suppressed, and the amount of use of the solvent (D) in the coating composition can be reduced, whereby the coating film will easily be formed.

The number of hydroxy groups which the polyester polymer (B) has on average in one molecule is preferably at least 3, more preferably from 4 to 40.

The polyester polymer (B) is more preferably a polyester polymer having at least 3 hydroxy groups on average in one molecule and having a number average molecular weight of from 500 to 5,000.

The polyester polymer (B) is preferably a polyester polymer having hydroxy groups, obtainable by polymerizing a polyvalent carboxylic acid and a polyhydric alcohol. The polyvalent carboxylic acid is preferably divalent or trivalent.

The polyvalent carboxylic acid may, for example, be succinic acid, maleic acid, phthalic acid, pyromellitic acid, trimellitic acid, cyclopentane tetracarboxylic acid, 1,2-hexahydrophthalic acid, methyl-1,2-hexahydrophthalic acid, 1,2-tetrahydroxyphthalic acid, methyltetrahydroxyphthalic acid or an acid anhydride thereof. Further, isophthalic acid, terephthalic acid, methyl terephthalic acid, methyl isophthalic acid, fumaric acid, sebacic acid, oxalic acid, glutaric acid, adipic acid, azelaic acid, 1,3-hexahydrophthalic acid, methyl-1,3-hexahydrophthalic acid, 1,3-tetrahydroxyphthalic acid, 1,4-hexahydrophthalic acid, methyl-1,4-hexahydrophthalic acid, 1,4-tetrahydroxyphthalic acid or the like may also be used.

Such polyvalent carboxylic acids may be used alone or in combination of two or more.

The polyhydric alcohol may, for example, be ethylene glycol, propanediol, butanediol, pentanediol, 1,6-hexanediol, 1,9-nonanediol, neopentyl glycol, 2,2-diethylpropanediol, cyclohexanediol, glycerin, trimethylolpropane, pentaerythritol, trimethylolethane, 1,4-cyclohexanedimethanol, 2,2,4-trimethyl-1,3-pentanediol, 2-butyl-2-ethyl-1,3-propanediol, hydroxypivalylhydroxypivalate, 3-methyl-1,5-pentanediol, 2-methyl-1,8-octanediol, 2-methyl-1,3-propanediol, polyethylene glycol or polypropylene glycol.

The polyhydric alcohol to be used for preparation of the polyester polymer (B) may be used alone or in combination of two or more.

For the polyester polymer (B), in addition to the polyvalent carboxylic acid and the polyhydric alcohol, a compound having a carboxy group and a hydroxy group in one molecule or a cyclized product thereof, for example, ε-caprolactone, may be used as the case requires.

The polyester polymer (B) may have other functional groups other than the hydroxy groups. In view of the weather resistance of the coating film, the mechanical properties, the oil resistance, the curing reactivity and the like, such other functional groups are preferably carboxy groups, amino groups, acetoacetyl groups or epoxy groups, more preferably carboxy groups.

As a method of introducing such functional groups, a method of copolymerizing a monomer having such a functional group and a polymerizable double bond, or a method of reacting the hydroxy groups in the polyester polymer (B) with a compound having such a functional group and a functional group reactive with a hydroxy group, may be mentioned.

The carboxy groups can be introduced to the polyester polymer (B) by polymerization using the above-described polyvalent carboxylic acid. Further, the amino groups, the acetoacetyl groups and the epoxy groups can be introduced, for example, by reacting a compound having a functional group reactive with a hydroxy group or a carboxy group and at least one of an amino group, an acetoacetyl group and an epoxy group, during production or after production of the polyester polymer (B).

In the present invention, the polyester polymer (B) may be used alone or in combination of two or more.

As the polyester polymer (B), commercially available products may be used. The commercially available products may, for example, be NIPPOLLAN 125P, NIPPOLLAN 131, NIPPOLLAN 133EP, NIPPOLLAN 139, NIPPOLLAN 179, NIPPOLLAN 800 and NIPPOLLAN 1100 (each manufactured by Nippon Polyurethane Industry Co., Ltd.), Desmophen 650, Desmophen 651, Desmophen 670 and Desmophen 800 (each manufactured by Sumitomo Bayer Urethane Co., Ltd.), and Burnock 11-408, Burnock D-210-80 and Burnock D-161 (each manufactured by Dainippon Ink and Chemicals).

As the polyester polymer (B) has excellent flexibility, the flexibility of a coating film to be formed by the coating composition of the present invention will be improved. Thus, a coating film formed on the surface of a reflective substrate of a solar heat-collecting reflective plate from the coating composition of the present invention is hardly scarred and cracked, since even if sand or the like impinges on the coating film, it absorbs the impact.

Further, while a polyester polymer is excellent in the flexibility, usually, it is inferior in the stain resistance due to a low surface hardness of a coating film. However, with the coating composition of the present invention, excellent stain resistance is also achieved, by using the above-described fluorinated polymer (A) and polyester polymer (B) each having a predetermined hydroxy value and crosslinking them by the curing agent (C). Further, as the fluorinated polymer (A) and the polyester polymer (B) are crosslinked by the curing agent (C), bleed out of the polyester polymer (B) from the coating film to be formed is suppressed, whereby effects can be obtained stably over a long period of time.

The content of the polyester polymer (B) in the coating composition of the present invention is preferably from 5 to 60 mass%, more preferably from 10 to 50 mass%. When the content of the polyester polymer (B) is at least the above lower limit, the coating film will be more flexible, whereby the impact resistance will be improved. When the content of the polyester polymer (B) is at most the above upper limit, the amount of the fluorinated polymer (A) can be relatively increased, whereby the weather resistance and the stain resistance of the coating film will be improved.

The mass ratio (A/B) of the fluorinated polymer (A) to the polyester polymer (B) in the coating composition of the present invention is preferably from 45/55 to 95/5, more preferably from 50/50 to 90/10. When the mass ratio (A/B) is within such a range, the weather resistance of the coating film will be improved, and the coating film will be more flexible, whereby the impact resistance will be improved.

### (Curing agent (C))

The curing agent (C) is a polyisocyanate type curing agent. The curing agent (C) may be a blocked polyisocyanate type curing agent having isocyanate groups protected, or may be a non-blocked polyisocyanate type curing agent having isocyanate groups not protected. The curing agent (C) undergoes crosslinking reaction with the fluorinated polymer (A) and the polyester polymer (B).

The curing agent (C) having isocyanate groups not protected may, for example, be a polyvalent isocyanate compound. The polyvalent isocyanate compound is a compound having at least two isocyanate groups in one molecule. The number of isocyanate groups contained in one molecule of the polyvalent isocyanate compound is preferably from 2 to 4, more preferably 2 or 3.

The polyvalent isocyanate compound may, for example, be an aliphatic polyvalent isocyanate compound such as ethylene diisocyanate, propylene diisocyanate, tetramethylene diisocyanate, hexamethylene diisocyanate, hexamethylene triisocyanate or lysine diisocyanate; an alicyclic polyvalent isocyanate compound such as isophorone diisocyanate, dicyclohexylmethane diisocyanate or diisocyanate methylcyclohexane; or a non-yellowing aromatic isocyanate compound such as m-xylene diisocyanate or p-xylene diisocyanate.

As the curing agent (C), a modified product of a polyvalent isocyanate compound may also be used.

The modified product of a polyvalent isocyanate compound may, for example, be a urethane modified product, a urea modified product, an isocyanurate modified product, a biuret modified product, an allophanate modified product or a carbodiimide modified product. Among them, it is preferably an isocyanurate modified product, a biuret modified product or a urethane modified product, more preferably an isocyanurate modified product or a biuret modified product.

Among them, the curing agent (C) is preferably a non-yellowing polyvalent isocyanate compound such as hexamethylene diisocyanate or isophorone diisocyanate, or an isocyanurate modified product or a biuret modified product thereof.

The curing agent (C) having isocyanurate groups protected may, for example, be a compound having isocyanate groups of the above polyvalent isocyanate compound protected by a group capable of being deprotected e.g. by heating. For example, it may be a compound having isocyanate groups protected by reacting the above polyvalent isocyanate compound with a known blocking agent such as an alcohol, a caprolactam, a MEK oxime or an organic acid ester.

The curing agent (C) may be used alone or in combination of two or more.

In a case where the non-blocked polyisocyanate curing agent is used as the curing agent (C), the curing agent is blended immediately before application of the coating composition. On the other hand, when the blocked polyisocyanate curing agent is used as the curing agent (C), the timing of blending the curing agent is not particularly limited.

With respect to the content of the curing agent (C) in the coating composition of the present invention, the curing agent (C) is blended so that the proportion of isocyanate groups is preferably from 0.5 to 1.5 times by mol, more preferably from 0.7 to 1.2 times by mol, per 1 mol of the total number of hydroxy groups contained in the fluorinated polymer (A) and the polyester polymer (B). When the content of the curing agent (C) is at least the above lower limit, the fluorinated polymer (A) and the polyester polymer (B) are likely to be sufficiently crosslinked. When the content of the curing agent (C) is at most the above upper limit, it is easy to prevent the unreacted curing agent (C) from being remaining in the coating film, thus impairing the performance of the coating film. For example, the unreacted curing agent (C) and the moisture in the air may be reacted with each other to form carbon dioxide, which may cause traces of foaming in the coating film, whereby the smoothness and the outer appearance of the coating film will be impaired.

### (Solvent (D))

The solvent (D) is not particularly limited so long as it can dissolve or disperse the fluorinated polymer (A), the polyester (B) and the curing agent (C) therein. The solvent (D) may, for example, be an aromatic compound such as xylene or toluene, a carbonyl compound such as methyl ethyl ketone or methyl isobutyl ketone, an acetate such as butyl acetate or amyl acetate; or a propylene glycol alkyl ether such as propylene glycol monomethyl ether.

The solvent (D) may be used alone or in combination of two or more.

The content of the solvent (D) in the coating composition of the present invention is preferably from 5 to 60 mass%, more preferably from 10 to 50 mass%. When the content of the solvent (D) is within such a range, the viscosity of the coating composition will be lower, whereby the coating operation will be easy, and further, it tends to be easy to remove the solvent (D) to form the coating film.

### (Pigment component (E))

In a case where the coating composition of the present invention is applied to a surface other than the sunlight irradiation surface of a reflective substrate of a solar heat-collecting reflective plate, it preferably contains a pigment component (E) for the purpose of anti-corrosion, coloring, reinforcement, and the like.

The pigment component (E) is preferably at least one pigment selected from the group consisting of an anti-corrosive pigment, a coloring pigment and an extender pigment.

The anti-corrosive pigment is a pigment to prevent corrosion or modification of the reflective, substrate. In view of a small environmental impact, a lead-free anti-corrosive pigment is preferred. The lead-free anti-corrosive pigment may, for example, be zinc cyanamide, zinc oxide, zinc phosphate, calcium magnesium phosphate, zinc molybdate, barium borate or calcium zinc cyanamide.

The coloring pigment is a pigment to color the coating film. The coloring pigment may, for example, be titanium oxide, carbon black or iron oxide. In a case where a titanium oxide pigment is used, in order to further improve the weather resistance of the coating film, preferred is one having the pigment surface treated to suppress the photocatalytic function. D918 (tradename, manufactured by Sakai Chemical Industry Co., Ltd.) and PFC105 (tradename, manufactured by Ishihara Sangyo Kaisha, Ltd.) are particularly recommendable.

The extender pigment is a pigment to improve the hardness of the coating film and to increase the thickness. The extender pigment may, for example, be tulc, barium sulfate, mica or calcium carbonate.

The pigment component (E) is particularly preferably titanium oxide in view of excellent weather resistance.

The content of the pigment component (E) in the coating composition when it is applied to a surface other than the sunlight irradiation surface of a reflective substrate, is preferably from 10 to 500 parts by mass, more preferably from 30 to 400 parts by mass per 100 parts by mass of the solid content other than the pigment in the coating composition. When the content of the pigment component (E) is within such a range, the function of the pigment component (E) is likely to be obtained, the coating film will hardly be scarred even if sand or the like impinges, and the weather resistance of the coating film will be improved.

In a case where the coating composition of the present invention is applied to the sunlight irradiation surface side of the reflective substrate, it preferably contains no pigment component (E) in order to prevent a decrease in the reflectance on the sunlight irradiation surface. In such a case, the content of the pigment component (E) in the coating composition is preferably at most 3 parts by mass, particularly preferably 0, per 100 parts by mass of the solid content other than the pigment in the coating composition.

### (Other components)

The coating composition of the present invention may contain other components other than the above-described respective components. For example, the coating composition of the present invention may contain a curing catalyst. By containing the curing catalyst, the crosslinking reaction may be accelerated. Particularly, in a case where the coating composition is to be cured at low temperature in a short time, it preferably contains a curing catalyst.

As the curing catalyst, a known curing catalyst may be used. For example, when as the curing agent (C), a polyvalent isocyanate compound or a compound having isocyanate groups thereof protected is used, dibutyltin dilaurate may, for example, be mentioned. The curing catalyst may be used alone or in combination of two or more.

The amount of addition of the curing catalyst is not particularly limited, and is preferably from 0.001 to 5 parts by mass per 100 parts by mass of the curing agent (C). When the content of the curing catalyst is within such a range, a sufficient catalytic effect will be obtained, and it is easy to prevent the curing catalyst from being remaining in the coating film, thus impairing the coating film and lowering the water resistance.

Further, with the coating composition of the present invention, depending upon the purpose, additives may properly be blended. The additives may, for example, be a silane coupling agent to improve the adhesion of the coating film; a photostabilizer such as a hindered amine type photostabilizer; an organic ultraviolet absorber such as a benzophenone type compound, a benzotriazole type compound, a triazine type compound or a cyanoacrylate type compound; an inorganic ultraviolet absorber such as zinc oxide or cerium oxide; a delustering agent such as ultrafine synthetic silica; a nonionic, cationic or anionic surfactant; a leveling agent; a filler; a thermal stabilizer; a thickener; a dispersing agent; and an antistatic agent.

Further, the coating composition of the present invention may contain, within a range not to impair the effects of the present invention, an acrylic polymer, an epoxy compound, a fluorinated polymer other than the fluorinated polymer (A), a polyester polymer other than the polyester polymer (B), or the like.

The coating composition of the present invention is preferably a composition having the following components combined.

(x) As the fluorinated polymer (A), a fluorinated polymer (A1) is used.

(y) As the polyester polymer (B), a polyester polymer having hydroxy groups obtainable by polymerizing a polyvalent carboxylic acid and a polyhydric alcohol is used.

Further, in the case of a coating composition to be applied on a surface other than the sunlight irradiation surface of a solar heat-collecting reflecting plate, it is preferred to further add the pigment component (E) to the above combination of components (x) and (y).

By using the above-described coating composition of the present invention, it is possible to form a coating film excellent in the weather resistance and the impact resistance, as a coating film to protect the surface of a reflective substrate of a solar heat-collecting reflective plate. Further, the coating film to be formed from the coating composition of the present invention is excellent in the adhesion to its underlayer, since there is a large number of urethane bonds in the coating film, and accordingly, the coating film is hardly peeled even thought the temperature difference in the usage environment is significant. Further, the coating film to be formed from the coating composition of the present invention is also excellent in the stain resistance since the crosslink density of the coating film is high.

### [Process for producing solar heat-collecting reflective plate]

The process for producing a solar heat-collecting reflective plate of the present invention is a process for producing a reflective plate to reflect sunlight in a solar heat-collecting system which collects solar heat and utilize it as thermal energy.

As the process for producing a solar heat-collecting reflective plate of the present invention, the coating composition for a solar heat-collecting reflective plate is applied on the surface of a reflective substrate to form a coating layer, and the solvent (D) is removed to form a coating film.

The reflective substrate in the present invention is not particularly limited so long as it is a substrate having a property to reflect sunlight. The material of the reflective substrate may, for example, be glass, a metal, a resin or a composite thereof. The reflective substrate is preferably a reflective substrate made of such a material, and having a property to reflect sunlight imparted to the surface of the plate-form or film-form substrate e.g. by mirror finish or formation of a reflective layer.

The reflective substrate is preferably any one of a reflective substrate (I) comprising a glass substrate having on at least one surface a reflective layer made of at least one of a metal and a metal oxide, a reflective substrate (II) made of a metal, of which the reflective surface side is mirror-finished, and a reflective substrate (III) made of a metal, having a reflective layer made of least one of a metal and a metal oxide formed on the reflective surface side.

As the process for producing the solar heat-collecting reflective plate of the present invention, depending upon the type of the reflective substrate to which the coating composition of the present invention is applied, the following processes (α) to (γ) may, for example, be mentioned.

(α) A process of applying the coating composition of the present invention to the surface of the reflective substrate (I) comprising a glass substrate having on at least one surface a reflective layer made of at least one of a metal and a metal oxide, to form a coating layer, and removing the solvent (D) to form a coating film.

(β) A process of applying the coating composition of the present invention to the surface of the reflective substrate (II) made of a metal, of which the reflective surface side is mirror-finished, to form a coating layer, and removing the solvent (D) to form a coating film.

(γ) A process of applying the coating composition of the present invention to the surface of the reflective substrate (III) made of a metal, having a reflective layer made of at least one of a metal and a metal oxide formed on the reflective surface side, to form a coating layer, and removing the solvent (D) to form a coating film.

The reflective substrate is a part constituting the main body of the solar heat-collecting reflective plate. In the production process of the present invention, the surface of the reflective substrate to which the coating composition is applied is the sunlight irradiation surface, the surface opposite to the sunlight irradiation surface and at least one surface of side surfaces of the reflective substrate. In the production process of the present invention, the coating film may be formed on the side opposite to the sunlight irradiation surface of the reflective substrate for the solar heat-collecting reflective plate, the coating film may be formed on the side surface of the reflective substrate, or the coating film may be formed on the sunlight irradiation surface side of the reflective substrate. In the production process of the present invention, it is preferred to form the coating film by the coating composition of the present invention on at least one of the surface opposite to the sunlight irradiation surface of the reflective substrate and the side surfaces.

### Process (α):

The reflective substrate (I) in the process (α) is a reflective substrate comprising a glass substrate having on at least one surface a reflective layer made of at least one of a metal and a metal oxide. The sunlight irradiation surface of the reflective substrate (I) is the surface on the glass substrate side, and the surface opposite to the sunlight irradiation surface is the surface on the reflective layer side.

For the glass substrate for the reflective substrate (I), known glass for a mirror may be used, and for example, soda lime glass may be mentioned. The solar heat-collecting reflective mirror of the present invention is sometimes placed in a desert area, and in such a case, sand or the like impinges at a high speed, whereby the glass surface may be broken. Accordingly, the glass substrate is preferably made of tempered glass. The thickness of the glass substrate is preferably from 0.5 to 10 mm.

The reflective layer (hereinafter referred to as "reflective layer (I)") made of at least one of a metal and a metal oxide in the reflective substrate (I) is a layer which reflects sunlight. The metal and the metal oxide forming the reflective layer (I) are not particularly limited so long as they can secure a high reflectance when formed into a reflective layer.

In a case where the reflective layer (I) is made of a metal, it preferably contains as the metal at least one element selected from the group consisting of titanium, molybdenum, manganese, aluminum, silver, copper, gold and nickel, particularly preferably silver. In such a case, the content of silver in the reflective layer (I) is preferably at least 60 mass%, particularly preferably 100 mass%.

In a case where the reflective layer (I) is made of a metal oxide, the metal oxide may be used alone or in combination of two or more. The metal oxide forming the reflective layer (I) is preferably titanium oxide.

Further, the reflective layer (I) may be a layer made of a metal and a metal oxide in combination.

The thickness of the reflective layer (I) is preferably from 300 to 1,500 mg/m².

The reflective substrate (I) can be produced by forming the reflective layer (I) on one surface of the glass substrate by a known method such as sputtering or a method of utilizing a chemical reaction such as silver mirror reaction.

The reflective layer (I) may be a single layer or two or more layers.

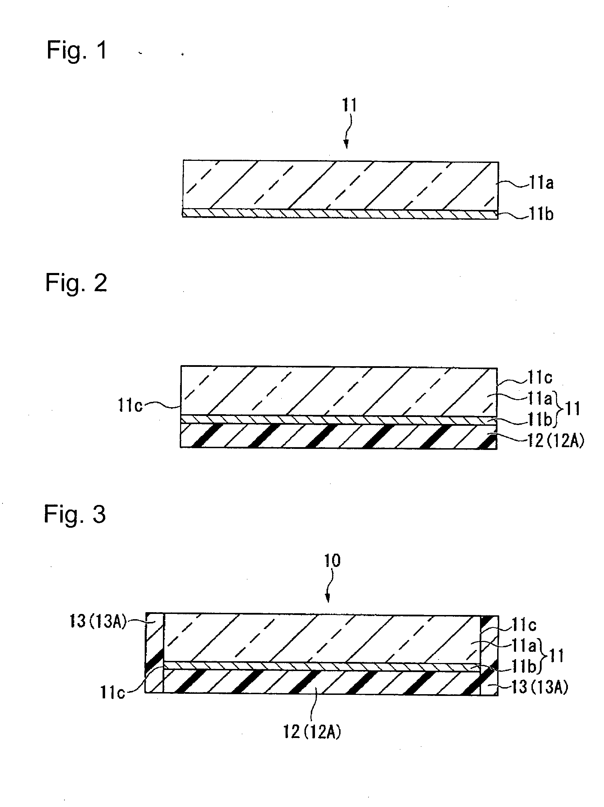

Now, one example of the process (α) will be described with reference to Figs. 1 to 3.

In this embodiment, a coating film is formed on the surface of a reflective substrate (I) 11 shown in Fig. 1. The reflective substrate (I) 11 comprises a glass substrate 11 a and a reflective layer (I) 11 b formed on one surface of the glass substrate 11 a.

In the production process according to this embodiment, as shown in Fig. 2, the coating composition of the present invention is applied to the reflective layer (I) 11 b side of the reflective substrate (I) 11 to form a coating layer 12A.

As the method of applying the coating composition, a method of using a brush, a roller, a spray, a flow coater, an applicator or the like may be mentioned. The application amount of the coating composition may properly be selected depending upon the desired dried film thickness.

Then, the solvent (D) is removed from the formed coating layer 12A to form a coating film 12. As a method of removing the solvent (B), preferred is a method of volatilizing the solvent (D) e.g. by heating or pressure reduction.

The temperature when the solvent (D) is removed is preferably from room temperature to 100°C, more preferably from room temperature to 80°C. When the temperature is at least the lower limit, the solvent (D) will easily be removed, and the curing reaction by the curing agent (C) is likely to proceed. When the temperature is at most the upper limit, the traces of foaming are less likely to form on the coating film 12.

In a case where the reflective layer (I) 11 b is formed on the glass substrate (I) 11a and the coating film 12 is continuously formed on the production line, the curing agent (C) in the coating composition of the present invention is preferably a blocked polyisocyanate type curing agent. That is, it is preferred to use a one-pack type coating composition having the curing agent (C) preliminarily blended. In such a case, removal of the solvent (D) and the deprotection of the protected isocyanate groups may be carried out simultaneously e.g. by heating, or the solvent (D) may be removed and then deprotection of the protected isocyanate groups is carried out e.g. by heating.

In a case where a non-blocked polyisocyanate type curing agent is used or in other cases, when the isocyanate groups of the curing agent (C) are not protected at the time of removal of the solvent (D), the efficiency of contact of the hydroxy groups in the fluorinated polymer (A) and the polyester polymer (B) with the isocyanate groups in the curing agent (C) tends to be high and the curing reaction is likely to proceed as the solvent (D) is removed.

The thickness of the coating film 12 to be formed is preferably from 0.5 to 100 µm, more preferably from 10 to 60 µm.

Then, as shown in Fig. 3, the coating composition of the present invention is applied to side surfaces 11 c of the reflective substrate (I) 11 to form a coating layer 13A.

As a method of applying the coating composition, with a view to easily applying it uniformly to the side surfaces 11 c of the reflective substrate (I) 11, manual application by using e.g. a brush or a spray is preferred. The application amount of the coating composition may properly be selected depending upon the desired dried film thickness.

Then, in the same manner as the formation of the coating film 12, the solvent (D) is removed from the formed coating layer 13A to form a coating film 13 thereby to obtain a solar heat-collecting reflective plate 10.

The thickness of the coating film 13 to be formed is preferably from 0.5 to 100 µm, more preferably from 3.0 to 30 µm.

According to the above-described production process, it is possible to obtain a solar heat-collecting reflective plate having a coating film which is excellent in the weather resistance and the impact resistance and which is hardly peeled even under usage conditions with a significant temperature difference, on the metal reflective layer side and the side surfaces of the reflective substrate. Further, the coating film of the solar heat-collecting reflective plate obtainable by the production process of the present invention is also excellent in the stain resistance.

In the process (α), it is preferred to apply the coating composition of the present invention to the side surfaces of the reflective substrate (I) in accordance with the above procedure, however, application to the side surfaces is not necessarily required in a case where the weather resistance and the like for the side surfaces are secured by another means.

### Process (β):

In the process (β), the reflective substrate (II) is a reflective substrate made of a metal, of which the reflective surface side is mirror-finished. The sunlight irradiation surface of the reflective substrate (II) is the mirror-finished surface. The reflective substrate (II) has merits that breakage is less likely, the weight can be reduced whereby the installation costs can be reduced and processing such as bending is easy, as compared with the glass substrate for the reflective substrate (I).

The thickness of the reflective substrate (II) is preferably from 0.1 to 10 mm, more preferably from 0.5 to 5 mm.

The substrate made of a metal for the reflective substrate (II) is preferably a substrate made of at least one member selected from the group consisting of aluminum, an aluminum alloy and stainless steel. Particularly, a substrate made of aluminum or an aluminum alloy is preferred.

The mirror finish is carried out usually by e.g. physical polishing, but may be carried out also by a chemical or electrical polishing method. At that time, the surface roughness Ra of the mirror-finished surface of the reflective substrate (II) after polishing is preferably at most 0.3 µm, more preferably at most 0.1 µm.

The process (β) can be carried out in the same manner as the process (α) except that the reflective substrate (II) is used instead of the reflective substrate (I). That is, application of the coating composition to the reflective substrate (II) and removal of the solvent (D) from the coating layer can be carried out in the same manner as in the process (α).

In the process (β), it is preferred to apply the coating composition of the present invention also to the side surfaces of the reflective substrate (II), however, application to the side surfaces is not necessarily required in a case where the water resistance and the like of the side surfaces are secured by another means.

### Process (γ):

The reflective substrate (III) in the process (γ) is a reflective substrate having a reflective layer made of at least one of a metal and a metal oxide (hereinafter referred to as "reflective layer (III)") formed on the reflective surface side. The sunlight irradiation surface of the reflective substrate (III) is the surface on the reflective layer (III) side.

The reflective substrate (III) has merits in the same manner as the reflective substrate (II), that breakage is less likely, the weight can be reduced whereby the insulation costs can be reduced and processing such as bending is easy, as compared with the glass substrate for the reflective substrate (I).

The thickness of the reflective substrate (III) is preferably from 0.1 to 10 mm, more preferably from 0.5 to 5 mm.

The substrate made of a metal for the reflective substrate (III) is preferably a substrate made of at least one member selected from the group consisting of aluminum, an aluminum alloy and stainless steel. Particularly, a substrate made of aluminum or an aluminum alloy is particularly preferred.

The metal and the metal oxide forming the reflective layer (III) are not particularly limited so long as they can secure a high reflectance when formed into a reflective layer.

In a case where the reflective layer (III) is made of a metal, it preferably contains as the metal at least one element selected from the group consisting of titanium, molybdenum, manganese, aluminum, silver, copper, gold and nickel. The metal forming the reflective layer (III) may be used alone or as an alloy of two or more.

Further, in a case where the reflective layer (III) is made of a metal oxide, the metal oxide may be used alone or in combination of two or more. The metal oxide forming the reflective layer (III) is preferably titanium oxide.

The reflective layer (III) can be formed by e.g. phosphate treatment, anodizing treatment or vacuum vapor deposition treatment, and its thickness is, for example, from 5 to 1,500 nm. The reflective layer (III) may be a single layer or two or more layers.

The process (γ) can be carried out in the same manner as the process (α) except that the reflective substrate (III) is used instead of the reflective substrate (I). That is, the application of the coating composition to the reflective substrate (III) and removal of the solvent (D) from the coating layer can be carried out in the same manner as in the process (α).

In the process (γ), it is preferred to apply the coating composition of the present invention also to the side surfaces of the reflective substrate (III), however, application to the side surfaces is not necessarily required in a case where the water resistance and the like of the side surfaces are secured by another means.

According to the above-described process for producing a solar heat-collecting reflective plate of the present invention, a solar heat-collecting reflective plate having on the surface of a reflective substrate a coating film which has excellent weather resistance and impact resistance and which is excellent in the adhesion and is thereby hardly peeled, can be obtained.

The production process of the present invention is not limited to the above-described processes. For example, a coating film of the coating composition of the present invention may be formed only on the surface opposite to the sunlight irradiation surface of the reflective substrate, or a coating film of the coating composition of the present invention may be formed only on the side surfaces of the reflective substrate. In such a case, it is preferred to form a known coating film on the surface opposite to the sunlight irradiation surface of the reflective substrate.

Further, a coating film of the coating composition of the present invention may be formed on the sunlight irradiation surface side of the reflective substrate.

Further, in a case where a coating film of the coating composition of the present invention is formed on the reflective layer (I) side of the reflective substrate (I), a known coating film (back coating film) to be provided on the back side of a mirror used indoors, may be formed between the coating film and the reflective layer (I).

Further, the coating composition of the present invention may be used also for a reflective substrate (hereinafter referred to as "reflective substrate (IV)") comprising a mirror-finished substrate made of a metal, having a reflective layer (hereinafter referred to as "reflective layer (IV)") further formed. The mirror finish for the reflective substrate (IV) is the same as the mirror finish for the reflective substrate (II). The reflective layer (IV) may be the same one as the reflective layer (III) for the reflective substrate (III).

### EXAMPLES

Now, the present invention will be described in detail with reference to Examples. However, it should be understood that the present invention is by no means restricted by the following description. Further, in Examples, "parts" means "parts by mass".

### <Preparation of fluorinated polymer (A1)>

### [Example 1]

600 parts by mass of ethyl 3-ethoxypropionate, 170 parts by mass of ethanol, 60 parts by mass of cyclohexyl vinyl ether (CHVE), 90 parts by mass of ethyl vinyl ether (EVE), 400 parts by mass of hydroxybutyl vinyl ether (HBVE), 5 parts by mass of potassium carbonate and 10 parts by mass of perbutyl PV (manufactured by NOF Corporation, organic peroxide) were put in an autoclave, the autoclave was sealed and evacuated of air, 680 parts by mass of chlorotrifluoroethylene (CTFE) was charged into the autoclave, and polymerization was carried out at 75°C for 17 hours. After the reaction, potassium carbonate was removed by filtration, and the concentration was adjusted to obtain an ethyl 3-ethoxypropionate solution (non-volatile content of 70 mass%) of fluorinated polymer A1).

The obtained fluorinated polymer A1 had a composition comprising polymerized units derived from CTFE/polymerized units derived from CHVE/polymerized units derived from EVE/polymerized units derived from HBVE (mol%)=50/5/10/35. Further, the fluorinated polymer A1 had a hydroxy value of 160 mgKOH/g resin and a number average molecular weight of 5,000.

The hydroxy value was measured in accordance with JIS K1557-1 (2007).

Further, the number average molecular weight was measured by gel permeation chromatography.

### <Preparation of fluorinated polymer (A2)>

### [Example 2]

590 parts by mass of xylene, 170 parts by mass of ethanol, 208 parts by mass of cyclohexyl vinyl ether (CHVE), 206 parts by mass of ethyl vinyl ether (EVE), 129 parts by mass of hydroxybutyl vinyl ether (HBVE), 11 parts by mass of potassium carbonate and 3.5 parts by mass of perbutyl PV (NOF Corporation, organic peroxide) were put in an autoclave, the autoclave was sealed and evacuated of air, 660 parts by mass of chlorotrifluoroethylene (CTFE) was charged to the autoclave, and polymerization was carried out at 65°C for 10 hours. After the reaction, potassium carbonate was removed by filtration, and the concentration was adjusted to obtain a xylene solution (non-volatile content of 60 mass%) of fluorinated polymer A2.

The obtained fluorinated polymer A2 had a composition comprising polymerized units derived from CTFE/polymerized units derived from CHVE/polymerized units derived from EVE/polymerized units derived from HBVE (mol%)=50/15/25/10. Further, the fluorinated polymer A2 had a hydroxy value of 52 mgKOH/g resin and a number average molecular weight of 10,000.

The hydroxy value was measured in accordance with JIS K1557-1 (2007).

Further, the number average molecular weight was measured by gel permeation chromatography.

### <Preparation of coating composition i>

### [Example 3]

To 23.8 g (number of moles of hydroxy groups: 47.5 mmol) of the ethyl 3-ethoxypropionate solution (non-volatile content of 70 mass%) of fluorinated polymer A1 obtained in Example 1, 10.0 g (number of moles of hydroxy groups: 51.7 mmol) of "NIPPOLLAN 800", tradename (average number of functional groups of hydroxy groups in one molecule: 4, hydroxy value: 290 mgKOH/g resin, carboxy value: 9 mgKOH/g resin, number average molecular weight: 700) as the polyester polymer (B), 20.6 g (number of moles of isocyanate groups: 98.3 mmol) of "CORONATE HX" (tradename, manufactured by Nippon Polyurethane Industry Co., Ltd., solid content: 100%, isocyanate group content: 21.0%, number of isocyanate average functional groups: 3.0) as the curing agent (C), 32.3 g of butyl acetate as the solvent (D) and 0.0005 g of dibutyltin dilaurate as the curing catalyst were added, followed by stirring by a paint shaker for 30 minutes. After stirring, filtration was carried out to obtain coating composition i.

### <Preparation of coating composition ii>

### [Example 4]

To 80.0 g (number of moles of hydroxy groups: 44.5 mmol) of the xylene solution (non-volatile content of 60 mass%) of fluorinated polymer A2 obtained in Example 2, 10.0 g (number of moles of hydroxy groups: 51.7 mmol) of "NIPPOLLAN 800", tradename (average number of functional groups of hydroxy groups in one molecule: 4, hydroxy value: 290 mgKOH/g resin, carboxy value: 9 mgKOH/g resin, number average molecular weight: 700) as the polyester polymer (B), 20.6 g (number of moles of isocyanate groups: 98.3 mmol) of "CORONATE HX" (tradename, manufactured by Nippon Polyurethane Industry Co., Ltd., solid content: 100%, isocyanate group content: 21.0%, number of isocyanate average functional groups: 3.0) as the curing agent (C), 32.3 g of butyl acetate as the solvent (D) and 0.0005 g of dibutyltin dilaurate as the curing catalyst were added, followed by stirring by a paint shaker for 30 minutes. After stirring, filtration was carried out to obtain coating composition ii.

### <Preparation of coating composition iii>

### [Example 5]

100.0 g (number of moles of hydroxy groups: 55.6 mmol) of the xylene solution (non-volatile content of 60 mass%) of fluorinated polymer A2 obtained in Example 2, 10.7 g (number of moles of isocyanate groups: 53.5 mmol) of "CORONATE HX" (tradename, manufactured by Nippon Polyurethane Industry Co., Ltd., solid content: 100%, isocyanate group content: 21.0%, number of isocyanate average functional groups: 3.0) as the curing agent (C), 32.3 g of butyl acetate as the solvent (D) and 0.0005 g of dibutyltin dilaurate as the curing catalyst were added, followed by stirring by a paint shaker for 30 minutes. After stirring, filtration was carried out to obtain coating composition iii.

### <Preparation of coating composition iv>

### [Example 6]

10.0 g (number of moles of hydroxy groups: 51.7 mmol) of "NIPPOLLAN 800", tradename (average number of functional groups of hydroxy groups in one molecule: 4, hydroxy value: 290 mgKOH/g resin, carboxy value: 9 mgKOH/g resin, number average molecular weight: 700) as the polyester polymer (B), 10.3 g (number of moles of isocyanate groups: 51.5 mmol) of "CORONATE HX" (tradename, manufactured by Nippon Polyurethane Industry Co., Ltd., solid content: 100%, isocyanate group content: 21.0%, number of isocyanate average functional groups: 3.0) as the curing agent (C), 32.3 g of butyl acetate as the solvent (D) and 0.0005 g of dibutyltin dilaurate as the curing catalyst were added, followed by stirring by a paint shaker for 30 minutes. After stirring, filtration was carried out to obtain coating composition iv.

### <Preparation of test plates II to V provided with anti-corrosive coating film> [Example 7]

To the surface of an aluminum plate subjected to chromate treatment, a lead-free epoxy resin type anti-corrosive coating material for a mirror (manufactured by DAINIPPON TORYO CO., LTD., "SM tradename, COAT DF") was applied so that the film thickness of the dry coating film became 50 µm, and dried and cured in an oven at 170°C for 5 minutes to form a coating film thereby to obtain test plate I provided with anti-corrosive coating film.

### <Evaluation of coating film (cured coating film) formed by coating composition>

### [Examples 8 to 11]

On the anti-corrosive coating film of test plate I provided with anti-corrosive coating film, coating compositions i to iv obtained in Examples 3 to 6 were applied so that the thickness of the dry coating film became 30 µm to form a coating layer, and cured in a constant temperature chamber at 25°C for one week to obtain test plates II to V provided with anti-corrosive coating film.

With respect to test plates II to V provided with anti-corrosive coating film, of the coating films formed from coating compositions i to iv, the hardness, the impact resistance, the initial adhesion to the back coating film, the adhesion to the back coating film after being left to stand under high temperature and high humidity conditions (85°C, 85% RH) for one month, the adhesion to the back coating film after being left to stand under high temperature and high humidity conditions (85°C, 85% RH) for two months, and the accelerated weather resistance were evaluated.

### [Evaluation methods]

With respect to test plates II to V provided with anti-corrosive coating film, the coating films formed from coating compositions i to iv were evaluated by the following methods.

### (Hardness)

The hardness of the coating film was measured by a method in accordance with JIS K5600-5-4 (2009).

### (Impact resistance)

The impact resistance test for the coating film was carried out by a method in accordance with IIS K5600-5-3 (2009), and the impact resistance was evaluated based on the following standards. For the falling-rate test, DuPont type was employed, and the test was carried out under conditions of a weight mass of 500 g and a height of 50 cm.
○: No cracking, damage or the like on the coating film confirmed.
×: Cracking, damage or the like on the coating film confirmed.

### (Adhesion to back coating film)

The adhesion to the back coating film was measured by a method in accordance with JIS K5600-5-6 (2009). Evaluation was made in accordance with JIS K5600-5-6 (2009), Table 1, classification of test results.

### (Accelerated weather resistance)

The accelerated weather resistance was evaluated by using a Sunshine Weather Meter (manufactured by Suga Test Instruments Co., Ltd.), and the weather resistance was evaluated by comparison between after exposure for 5,000 hours and the initial state. The weather resistance was evaluated based on the following standards.
○: The gloss retention rate being at least 80%.
Δ: The gloss retention rate being at least 60% and less than 80%.
×: The gloss retention rate being less than 60%.

The evaluation results of the coating films are shown below.

**[Table 1]**

| Test plate | II | III | IV | V |
|---|---|---|---|---|
| Coating composition | i | ii | iii | iv |
| 1. Type of (A) | A1 | A2 | A2 | - |
| 2. Number of moles of hydroxy groups in (A) (mmol) | 47.5 | 44.5 | 55.6 | - |
| 3. Number of moles of hydroxy groups in (B) (mmol) | 51.7 | 51.7 | - | 51.7 |
| 4. Number of moles of isocyanate groups in (C) (mmol) | 98.3 | 98.3 | 53.5 | 51.5 |
| 5. Isocyanate groups/ hydroxy groups (molar ratio) | 0.99 | 1.02 | 0.96 | 1.00 |
| | | | | |

| <Evaluation of coating film> | | | | |
|---|---|---|---|---|
| 1. Outer appearance of coating film | ○ | × (clouded) | ○ | ○ |
| 2. Hardness | B | - | HB | B |
| 3. Impact resistance | ○ | - | ○ | ○ |
| 4. Adhesion (initial) | Classification: 0 | - | Classification: 0 | Classification: 0 |
| 5. Adhesion (after being left to stand under high temperature and high humidity conditions for 1 month) | Classification: 0 | - | Classification: 1 | Classification: 0 |
| 6. Adhesion (after being left to stand under high temperature and high humidity conditions for 2 months) | Classification: 0 | - | Classification: 5 | Classification: 0 |
| Accelerated weather resistance | ○ | - | ○ | × |

### <Production and evaluation of solar heat-collecting reflective mirror>

### [Example 12]

On one surface of a glass substrate, silver plating treatment was applied so that the thickness became 1,200 mg/m², then on such a silver plating film, a lead-free epoxy resin type anti-corrosive coating material for a mirror ("SM tradename COAT DF" manufactured by DAINIPPON TORYO CO., LTD.) was applied by a curtain flow coater so that the film thickness of the dry coating film became 30 µm and cured in a drying furnace at 180°C. Thereafter, it was cooled to room temperature in an annealing furnace to obtain a reflective mirror provided with an anti-corrosive coating film.

Then, to the anti-corrosive coating film of the reflective mirror provided with an anti-corrosive coating film, the coating composition i obtained in Example 3 was applied so that the film thickness became 25 µm, and dried and cured in an oven at 180°C for 5 minutes. Further, to the edge portion of the reflective mirror, the coating composition i obtained in Example 3 was applied by a brush and cured at room temperature for one week to obtain a test solar heat-collecting reflective mirror. With respect to the obtained solar heat-collecting reflective mirror, an accelerated weather resistance test and a real exposure test were carried out.

### [Evaluation methods]

### (Accelerated weather resistance test)

Using Accelerated Weathering Tester (model: QUV/SE manufactured by Q-PANEL LAB PRODUCTS), the gloss retention rate of a coating film, the presence or absence of peeling of a coating film, and the abnormality of the reflective silver layer were evaluated by comparing the initial stage and after exposure for 5,000 hours.

### 1. Gloss retention rate of coating film

The gloss of a coating film surface was measured by means of PG-1 M (gloss meter manufactured by Nippon Denshoku Industries Co., Ltd.), and the weather resistance was evaluated in accordance with the following standards.
"○": The gloss retention rate was at least 80%.
"Δ": The gloss retention rate was at least 60% and less than 80%.
"×": The gloss retention rate was less than 60%.

### 2. Presence or absence of peeling of coating film

The weather resistance was evaluated in accordance with the following standards.
"○": No peeling of the coating film was observed.
"×": Peeling of the coating film was observed.

### 3. Abnormality of reflective silver layer

The weather resistance was evaluated in accordance with the following standards.
"○": A decrease in reflectance of the mirror due to silver sink, rusting, etc. was not observed.
"×": A decrease in reflectance of the mirror due to silver sink, rusting, etc. was observed.

### (Real exposure test)

The obtained solar heat-collecting reflective mirror was set outdoors in Naha city, Okinawa Prefecture, Japan, and the gloss retention rate of the coating film, the presence or absence of peeling of the coating film and abnormality of the reflective silver layer were evaluated by comparing immediately before the setting with after 1 year.

### 1. Gloss retention rate of coating film

The gloss of a coating film surface was measured by means of PG-1 M (gloss meter manufactured by Nippon Denshoku Industries Co., Ltd.), and the weather resistance was evaluated in accordance with the following standards.
"○": The gloss retention rate was at least 80%.
"Δ": The gloss retention rate was at least 60% and less than 80%.
"×": The gloss retention rate was less than 60%.

### 2. Presence or absence of peeling of coating film

The weather resistance was evaluated in accordance with the following standards.
"○": No peeling of the coating film was observed.
"×": Peeling of the coating film was observed.

### 3. Abnormality of reflective silver layer

The weather resistance was evaluated in accordance with the following standards.
"○": A decrease in reflectance of the mirror due to silver sink, rusting, etc. was not observed.
"×": A decrease in reflectance of the mirror due to silver sink, rusting, etc. was observed.

**[Table 2]**

| | Ex. 12 |
|---|---|
| Accelerated weather resistance test | |
| 1. Gloss retention rate of coating film | ○ |
| 2. Presence or absence of peeling of coating film | ○ |
| 3. Abnormality of reflective silver layer | ○ |

| Real exposure test | |
|---|---|
| 1. Gloss retention rate of coating film | ○ |
| 2. Presence or absence of peeling of coating film | ○ |
| 3. Abnormality of reflective silver layer | ○ |

### INDUSTRIAL APPLICABILITY

By the coating composition for coating the surface of a solar heat-collecting reflective plate of the present invention, it is possible to form a coating film which has excellent weather resistance and impact resistance and which is excellent in the adhesion is thereby hardly peeled, on the surface of a reflective substrate of a solar heat-collecting reflective plate. A solar heat-collecting reflective plate having such a coating film can be used even under severe environment of e.g. desert areas and is practically useful.

The entire disclosure of Japanese Patent Application No. 2010-225785 filed on October 5, 2010 including specification, claims, drawings and summary is incorporated herein by reference in its entirety.

### REFERENCE SYMBOLS

10: Solar heat-collecting reflective plate
11: Reflective substrate (I)
11 a: Glass substrate
11 b: Reflective layer (I)
12, 13: Coating film
12A, 13A: Coating layer

## Claims

1. A coating composition for coating the surface of a solar heat-collecting reflective plate, which comprises a fluorinated polymer (A) having a hydroxy value of from 110 to 250 mgKOH/g resin, a polyester polymer (B) having a hydroxy value of from 100 to 300 mgKOH/g resin, a polyisocyanate type curing agent (C) and a solvent (D).

2. The coating composition for coating the surface of a solar heat-collecting reflective plate according to Claim 1, wherein the polyester polymer (B) has at least three hydroxy groups on average in one molecule and has a number average molecular weight of from 500 to 5,000.

3. The coating composition for coating the surface of a solar heat-collecting reflective plate according to Claim 1 or 2, wherein the polyisocyanate type curing agent (C) is blended so that the proportion of isocyanate groups is from 0.5 to 1.5 times by mol per 1 mol of the total number of hydroxy groups contained in the fluorinated polymer (A) and the polyester polymer (B).

4. The coating composition for coating the surface of a solar heat-collecting reflective plate according to any one of Claims 1 to 3, wherein the mass ratio (A/B) of the fluorinated polymer (A) to the polyester polymer (B) is from 45/55 to 95/5.

5. The coating composition for coating the surface of a solar heat-collecting reflective plate according to any one of Claims 1 to 4, which contains a pigment component (E).

6. A process for producing a solar heat-collecting reflective plate, which comprises applying the coating composition as defined in any one of Claims 1 to 5 on a surface of a reflective substrate to form a coating layer, and removing the solvent (D) to form a coating film.

7. The process for producing a solar heat-collecting reflective plate according to Claim 6, wherein the reflective substrate is a reflective substrate (I) comprising a glass substrate having on at least one surface a reflective layer made of at least one of a metal and a metal oxide.

8. The process for producing a solar heat-collecting reflective plate according to Claim 6, wherein the reflective substrate is a reflective substrate (II) made of a metal, of which the reflective surface side is mirror-finished.

9. The process for producing a solar heat-collecting reflective plate according to Claim 6, wherein the reflective substrate is a reflective substrate (III) made of a metal, having a reflective layer made of at least one of a metal and a metal oxide formed on the reflective surface side.

10. The process for producing a solar heat-collecting reflective plate according to Claim 8 or 9, wherein the substrate made of a metal is a substrate made of at least one member selected from the group consisting of aluminum, an aluminum alloy and stainless steel.
